(19) Europäisches Patentamt / European Patent Office / Office européen des brevets

(11) EP 1 774 099 B1

(12) # EUROPÄISCHE PATENTSCHRIFT

(45) Veröffentlichungstag und Bekanntmachung des Hinweises auf die Patenterteilung:
**09.01.2008 Patentblatt 2008/02**

(21) Anmeldenummer: **05764217.5**

(22) Anmeldetag: **21.07.2005**

(51) Int Cl.:
***D21H 21/20*** *(2006.01)*

(86) Internationale Anmeldenummer:
**PCT/EP2005/007962**

(87) Internationale Veröffentlichungsnummer:
**WO 2006/015698 (16.02.2006 Gazette 2006/07)**

(54) **PAPIERERZEUGNIS MIT ERHÖHTER RELATIVER NASSREISSFESTIGKEIT UND WEICHHEIT, VERFAHREN ZU DESSEN HERSTELLUNG SOWIE DESSEN VERWENDUNG**

PAPER PRODUCT WITH INCREASED RELATIVE WET TENSILE STRENGTH AND SOFTNESS METHOD FOR PRODUCTION AND USE THEREOF

ARTICLE EN PAPIER PRESENTANT UNE SOUPLESSE ET UNE RESISTANCE A LA DECHIRURE A L'ETAT HUMIDE RELATIVE ACCRUES, PROCEDE DE FABRICATION ET UTILISATION DUDIT ARTICLE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **05.08.2004 DE 102004038132**

(43) Veröffentlichungstag der Anmeldung:
**18.04.2007 Patentblatt 2007/16**

(73) Patentinhaber:
- **Fraunhofer-Gesellschaft zur Förderung der angewandten Forschung e.V. 80686 München (DE)**
- **SCA Hygiene Products GmbH 68305 Mannheim (DE)**

(72) Erfinder:
- **STORSBERG, Joachim 55286 Woerrstadt (DE)**
- **BRUZZANO, Stefano 14469 Potsdam (DE)**
- **LASCHEWSKY, André 14469 Potsdam (DE)**
- **SIEVERLING, Nathalie 14469 Potsdam (DE)**
- **EICHHORN, Stephan 64579 Gernsheim (DE)**
- **STAPEL, Siegfried 68307 Mannheim (DE)**

(74) Vertreter: **Pfenning, Meinig & Partner GbR Patent- und Rechtsanwälte Theresienhöhe 13 80339 München (DE)**

(56) Entgegenhaltungen:
**WO-A-00/40639**
**DE-A1- 19 640 205**
**DE-T2- 69 814 359**
**DE-A1- 10 346 750**
**DE-A1- 19 909 835**
**US-A1- 2004 149 411**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 774 099 B1

## Beschreibung

Die vorliegende Erfindung betrifft flächige Papiererzeugnisse mit erhöhter relativer Nassreißfestigkeit und Weichheit, ein Verfahren zur Herstellung derselben sowie die Verwendung derartiger Papiererzeugnisse in Form von Tissueprodukten. Erreicht wird dies durch eine Vernetzung der im Papiererzeugnis enthaltenen Cellulosefasern mit einem kationischen Pfropfcopolymer, das auf Basis von Polyethylenoxid- bzw. Polyethylenglycol-Segmenten und Polyethylenimin-Segmenten aufgebaut ist.

Die gegenseitige Vernetzung von Cellulosefasern im Papierherstellungsprozess ist entscheidend für die Qualität und die Eigenschaften des produzierten Papiers. Ohne Haftvermittler bilden Cellulosefasern hauptsächlich nur Wasserstoffbrückenbindungen an den Kreuzungspunkten aus. Ein solches Papier besitzt keine Nassfestigkeit und hat nur eine eingeschränkte Elastizität bzw. Weichheit. Unter Nassfestigkeit versteht man die Festigkeit von Papieren im völlig durchnässten Zustand. Um die Haftung der Cellulosefasern untereinander und somit die Gebrauchseigenschaften des Papiers zu verbessern, werden weltweit u.a. polymere Haftvermittler auf Epichlorhydrin-Basis oder auf Polyacrylamid-Basis als sog. Nassfestmittel eingesetzt.

Die bei der Papierherstellung verwendeten Cellulosefasern sind negativ geladen. Für eine einfache und wirtschaftliche, dem Fachmann bekannte Papierherstellungsmethode ist es am günstigsten, wenn Behandlungschemikalien, z.B. Nassfestmittel direkt zu der wässrigen Zellstoffsuspension dosiert werden, mit der dann das Papier hergestellt wird. Im Nachfolgenden sei der technische Tissue-Herstellungsprozess kurz erläutert.

Die wässrige Zellstoffsuspension wird im technischen Prozess dann auf das/die Maschinensieb(e) gegeben, dort formiert und teilentwässert und gelangt anschließend in die Trockenpartie der Tissuemaschine. In der Trockenpartie befindet sich der sogenannte dampfbeheizte Yankee-Zylinder, welcher eine Oberflächentemperatur von 80 bis 140°C aufweist. Darüber können sich zusätzlich eine oder mehrere gasbeheizte Hauben befinden, durch die heiße Luft auf die Tissuebahn geblasen wird. Die Luft wird hierfür auf Temperaturen von 200 bis 750°C erwärmt. Während einer extrem kurzen Kontaktzeit von wenigen ms am Zylinder beginnt der Aushärtungsprozess der Nassfestmittel, der während der anschließenden Lagerung der fertigen Tissuebahn abgeschlossenen wird, der sog. Nachreifung.

Damit man ein potentielles Nassfestmittel bei der Anwendung auf die Zellstoffsuspension auf die Cellulosefaser aufziehen kann, ist dieses vorteilhaft wasserlöslich bzw. wasserdispergierbar und kationisch, da die bei der Papierherstellung verwendeten Cellulosefasern negativ geladen sind. Als derzeitiger Stand der Technik wird daher die Verwendung kationischer Polymere als Nassfestmittel in der Papier- bzw. Tissueindustrie angesehen, die auf z.T. sehr unterschiedlichen chemischen Strukturierungen wie Polyamiden oder Polyacrylamiden basieren. Diese Nassfestmittel werden üblicherweise bei Haushaltstüchern in Mengen von 8 bis 10 kg/Tonne zugesetzt. Die Zellulosefasern des Papiers oder Tissues halten im trocken Zustand im Netzwerk eines Blattes durch Faser-Faser-Kontaktstellen zusammen, die auf van-der Waals- bzw. Wasserstoffbrückenbindungen beruhen. Diese Bindungen sind sehr sensitiv gegenüber Wasser, d.h. je feuchter das Tuch wird, desto lockerer werden diese Bindungen. Um sogenannte nassfeste Papiere wie z.B. Küchen- bzw. Haushalttücher oder Hygienepapiere herstellen zu können, werden Nassfestmittel zugesetzt, welche die Aufgabe haben, Bindungen zu formieren, die gegen Wasser zumindest zeitweise beständig sind. Nach dem gegenwärtigen Stand der Technik stehen verschiedene chemisch basierende polymere Nassfestmittel in der Papier- bzw. Tissueherstellung zur Verfügung, die in der einschlägigen Literatur, z.B. in "Papermaking Chemistry", Book 4, Ed. Leo Neimo, pp 288-301, beschrieben sind. Zum Einsatz kommen überwiegend Melamin-Formaldehyd Harze (MF) (US 4,461,858) und kationische Polymere auf Basis von Polyamid-Epichlorhydrin (PAE) und Polyamidoamin-Epichlorhydrin (PAAE) (US 2, 926, 116, US 2,926, 154, US 3, 733, 290, US 4,566,943, US 4, 605, 702).

Nachteil bei den vorgenannten Nassfestmitteln ist zum einen, dass das behandelte Tissue zwar eine erhöhte Nassfestigkeit hat, jedoch eine verringerte Weichheit aufweist. Die angestrebte Weichheit muss dann durch eine zusätzliche mechanische Behandlung des Tissues erreicht werden. Ein weiterer Nachteil der PAE's ist der herstellungsbedingte Gehalt an organischen Halogenverbindungen. Die WO 00/40639 beschreibt ein PAEbasierendes Nassfestmittel mit niedrigem Gehalt an organisch gebundenem Chlor. Weiterhin werden in der DE 196 40 205 A1 wasserdispergierbare Nassfestmittel auf Polyisocyanatbasis beschrieben, welche durch Umsetzung der Ausgangskomponenten Polyisocyanat, Polyalkylenoxidpolyetheralkohol, eines quaternisierten Aminopolyalkylenoxid-polyetheralkohols, sowie gegebenenfalls weiterer Hilfs- und Zusatzstoffe erhalten werden. Ferner lehrt die DE 698 14 359 T2, dass z.B. Polyethylenimin zu den temporären Nassfestmitteln gehört.

Weiterhin ist dem Fachmann bekannt, dass Polymere, die einen niedrigen Glasübergangspunkt, d.h. ≤ RT, besitzen, weiche Eigenschaften besitzen. Die DE 689 16 860 beschreibt ausführlich ein Verfahren zur Herstellung aufsaugender Strukturen, bei denen die absorbierenden Strukturen aus gemischten Papierrohstoffen, von denen einer mit einem Latex mit Elastomerkern behandelt wird, hergestellt werden. Hierbei wird die Weichheit durch den Latex mit niedrigem Glasübergangspunkt erreicht. Damit die Latices im Nassverfahren auf die Cellulosefaser aufziehen, haben diese eine polymere Hülle auf Basis von Oleyl-Polyethoxylat, welches eine quaternäre funktionelle (Trimethyl)-Ammonium-Gruppe am Ende der Ethoxylat-Kette trägt. Nachteilig bei diesem Verfahren ist jedoch, dass die weichen Latices von hydrophober Natur sind und somit das Aufsaugvermögen des daraus hergestellten Papiers bei einer einfachen "one

batch" Anwendung negativ beeinflussen. Darum muss bei diesem Verfahren mit verschiedenen Zellstoffsuspensionen gearbeitet werden, von denen nur eine mit dem Latex behandelt wird. In einem weiteren Schritt wird die mit Latex behandelte Zellstoffsuspension mit einer unbehandelten Fasersuspension vermischt, um so die wasseraufsaugende Wirkung des Papieres zu erreichen. Die WO 96/33310 beschreibt ein Verfahren zur Herstellung von weich-gekrepptem Tissue, welches durch einen speziell geführten Herstellungsprozess, vornehmlich durch mechanische Behandlung, enthalten wird.

Aufgabe der vorliegenden Erfindung ist es daher, ein Nassfestmittel zu entwickeln, das die vorgenannten Probleme überwindet. Dabei sollte die Nassfestigkeit erhöht werden, ohne negative Auswirkungen auf die Weichheit zu haben. Gleichzeitig sollte auch die Saugfähigkeit des Papiers nicht negativ beeinflusst werden. Weiterhin sollte die Anwendung der Chemikalie möglichst einfach direkt in der Zellstoffpulpe oder während der Herstellung des Papiererzeugnisses erfolgen. Mehrstufige Verfahren, wie z.B. das Mischen von behandelter Pulpe mit unbehandelter Pulpe, wie beispielsweise in DE 689 16 860 T2 beschrieben, sollten hingegen vermieden werden. Weiterhin sollte der Einsatz organisch gebundener Halogene in den Behandlungschemikalien vermieden werden.

Diese Aufgabe wird durch das Papiererzeugnis mit den Merkmalen des Anspruchs 1 und das Verfahren zur Herstellung des Papiererzeugnisses mit den Merkmalen des Anspruchs 12 gelöst. Die weiteren abhängigen Ansprüche zeigen vorteilhafte Weiterbildungen auf. In Anspruch 23 wird die Verwendung des erfindungsgemäßen Papiererzeugnisses beschrieben.

Erfindungsgemäß wird ein Papiererzeugnis mit erhöhter relativer Nassreißfestigkeit und Weichheit bereitgestellt, das Cellulosefasern enthält, die mit einem Pfropfcopolymer aus einem Polyethylenimin-Segment der allgemeinen Formel I,

I 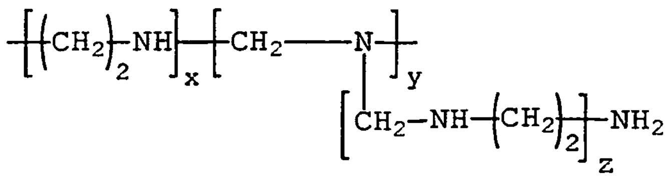

wobei x, y und z so gewählt sind, dass die Molmasse des Polyethylenimin-Segments im Bereich von 1000 bis 2000000 Dalton liegt,
sowie mindestens einem Polyalkylenoxid- und/oder mindestens einem Polyalkylenglycol-Segment der allgemeinen Formel II,

II 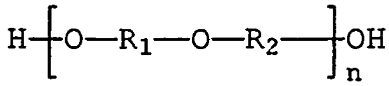

mit $R_1$ und $R_2$ unabhängig voneinander $C_1$ bis $C_{12}$-Alkyl, wobei n so gewählt ist, dass die Molmasse des Polyalkylenoxid- oder Polyalkylenglykol-Segments im Bereich von 350 bis 2000000 Dalton liegt,
vernetzt sind.

Es wurde überraschenderweise gefunden, dass durch die Anwendung von Pfropfcopolymerisation in der wässrigen Zellstoffsuspension, die aus verzweigtem oder linearem Polyethylenimin (PEI) bestehen, auf die Polyalkylenglykol- bzw. Polyalkylenoxid-Segmente gepfropft wurden, d.h. durch kovalente Bindung chemisch mit den N-Atomen des PEI verknüpft wurden, die vorgenannten Probleme überwunden werden können. Alternativ lassen sich die vorgenannten Probleme durch die Anwendung von Pfropfcopolymerisation in der wässrigen Zellstoffsuspension überwinden, die aus Polyalkylenglykol- bzw. Polyalkylenoxid-Segmenten bestehen, auf die Polyethylenimin gepfropft wurde. Die vorgenannten Probleme werden hingegen nicht überwunden, wenn Mischungen aus Polyalkylenglykol-Homopolymeren und PEI-Homopolymeren oder nur Polyalkylenglykol-Homopolymer oder nur PEI-Homopolymer eingesetzt werden. Erst durch die gepfropfte Polymerstruktur wird die erfindungsgemäße Wirkung erreicht.

Vorzugsweise besteht das Rückgrat des Pfropfcopolymers aus Polyethylenimin, wobei an diesem Pfröpfe aus mindestens einem Polyalkylenoxid und/oder mindestens ein Polyalkylenglykol gebunden sind. Eine andere Variante sieht vor, dass das Pfropfcopolymer ein Rückgrat aus mindestens einem Polyalkylenoxid und/oder mindestens einem Polyalkylenglykol aufweist, wobei dann Pfröpfe aus Polyethylenimin vorliegen.

Vorzugsweise besteht das Pfropfcopolymer aus Polyethylenimin mit einer Molmasse im Bereich von 20000 bis 1000000 Dalton.

Als Polyalkylenglykol wird vorzugsweise Polyethylenglykol bzw. als Polyalkylenoxid vorzugsweise Polyethylenoxid eingesetzt. Diese weisen dabei bevorzugt eine Molmasse im Bereich von 350 bis 1000000 Dalton, besonders bevorzugt von 350 bis 80000 Dalton auf.

Eine endständige Hydroxylgruppe des Polyalkylenoxids und/oder Polyalkylenglykols ist vorzugsweise blockiert. Bevorzugt ist die terminale Hydroxygruppe dabei mit einer Metoxy-, Ethoxy-, Propyloxy-, Butyloxy- und/oder Benzyloxygruppe blockiert. Die freie terminale Hydroxylgruppe des Polyalkylenglykols oder Polyalkylenoxids wird in eine chemisch-reaktive Gruppe, z.B. durch Reaktion mit Epihalogenhydrin durch Bildung eines Polyethylenglykolglycidylethers überführt. Derart modifizierte Polyalkylenglykole bilden dann durch chemische Reaktion mit den primären und sekundären Amingruppen des Polyethylenimins die für die erfindungsgemäßen Papiererzeugnisse gewünschten Pfropfcopolymere.

Erfindungsgemäß wird ebenso ein Verfahren zur Herstellung flächiger Papiererzeugnisse mit erhöhter relativer Nassreißfestigkeit und Weichheit aus einer Zellstoffsuspension bereitgestellt, bei dem der Zellstofsuspension ein Pfropfcopolymer aus einem Polyethylenimin-Segment der allgemeinen Formel I

I

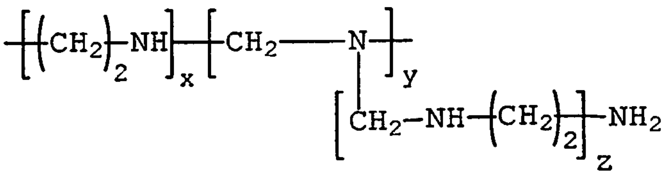

wobei x, y, z so gewählt sind, dass die Molmasse im Bereich von 1000 bis 2000000 Dalton liegt, sowie mindestens ein Polyalkylenoxid- und/oder mindestens ein Polyalkylenglykol-Segment der allgemeinen Formel II

II

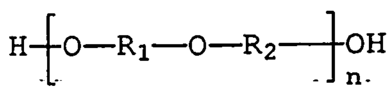

mit $R_1$ und $R_2$ unabhängig voneinander $C_1$ bis $C_{12}$-Alkyl und n so gewählt ist, dass dessen Molmasse im Bereich von 350 bis 2000000 Dalton liegt,
zugesetzt wird und/oder das Papiererzeugnis während seiner Herstellung oder nachträglich mit dem Pfropfcopolymer behandelt wird.

Polyalkylenglykole lassen sich mit Polyethylenimin durch verschiedene Methoden kuppeln, um so die gewünschten Pfropfcopolymere zu erhalten. Sung et al. (Biol. Pharm, Bull. 26(4), 492-500 (2003) beschreiben die Synthese von auf PEI gepfropften Polyalkylenglykolen. Dabei gehen sie in der Synthese von einem einseitig mit einer Methylgruppe terminierten Polyethylenglycol (MPEG) aus, welches mit Epichlorhydrin unter Baseneinwirkung zu einem Epoxy-terminierten MPEG umgesetzt wird. Dieses Epoxy-terminierte MPEG wird in einem weiteren Syntheseschritt auf das PEI gepfropft, so dass ein Pfropfcopolymer erhalten wird. Durch Variation der eingesetzten MPEG-Molekulargewichte sowie aus dem Verhältnis von Epoxy-terminierten MPEG zu PEI lassen sich verschiedene Strukturen mit unterschiedlichen Pfropfgraden und Längen der Pfropfäste synthetisieren.

Eine weitere Methode um Pfropfcopolymere auf Basis von Polyalkylenglykol-Polyethylenimin zu synthetisieren besteht darin, eine Polyalkylenglykol-Carbonsäure mit den aus der Peptidchemie bekannten gängigen Kupplungsmethoden mit den primären bzw. sekundären Amingruppen des PEI durch das Knüpfen von Peptidbindungen zu verbinden. Die gängigen Kupplungsmethoden, z.B. mit Hilfe von Carbodiimiden, sind beispielsweise in "Aminosäuren, Peptide, Proteine", H. Jakubke, H. Jeschkeit, Lizenzausgabe für den Verlag Chemie, Weinheim, 1982, ISBN 3-527-25892-2 beschrieben. Neuere Kupplungsmethoden mit wasserlöslichen Kupplungsreagenzien, wie z.B. dem N-(3-Dimethylaminopropyl)-N'-ethylcarbodiimidhydrochlorid, sind beispielsweise beschrieben im Sheehan et al (J. Am. Chem. Soc. 95, 875 (1973)), Nozaki et al. (Bull. Chem. Soc. Jpn. 55, 2165 (1982)) und Schmidt et al. (J. Chem. Soc. Chem. Commun. 1687 (1992)).

Mit den vorgenannten Methoden ist es auch möglich, Polyethylenimine auf Polyethylenglykole zu pfropfen. Dies ist beispielsweise möglich durch Verwendung von bifunktionellen Polyethylenglykolen wie z.B. Polyethylenglykoldisäuren oder Polyethylenglykolbisglycidylether.

Besonders bevorzugt sind Kupplungsmethoden mit Aktivatoren, welche die Kupplung unter wässrigen Bedingungen erlauben, wie z.B. dem N-(3-Dimethylaminopropyl)-N'-Ethylcarbodiimid-hydrochlorid. Die Kupplung kann prinzipiell auch mit organischen wasserfreien Lösungsmitteln mittels Carbodiimiden und Carbonyldiimidazolen durchgeführt werden.

Das vorgenannte Pfropfcopolymer wird als Additiv einem Papiererzeugnis, insbesondere einem sog. Tissueprodukt beigefügt. Weitere Papiererzeugnisse, welchen das beschriebene Pfropfcopolymer als Additiv zugesetzt werden kann, sind u.a. graphische Papiere, Zeitungspapier, Pappe, Kopierpapier sowie Spezialpapiere wie beispielsweise Banknoten oder aber Filterpapiere. Von üblichen Papieren unterscheidet sich ein sog. Tissuepapier, aus welchem Tissueprodukte bestehen, insbesondere durch sein sehr geringes Flächengewicht von üblicherweise weniger als 40 g/m$^2$.

Als "Tissuepapiere" oder besser als Rohtissuepapiere beschreibt man im allgemeinen die von der Papiermaschine kommenden einlagigen Zwischenprodukte aus leichten, d.h. mit niedrigem Flächengewicht erzeugten Papieren, die in der Regel auf einem sog. Yankee-Zylinder mit Hilfe eines Kreppschabers trockengekreppt wurden. Dabei kann das einlagige Rohtissue aus jeweils einer oder aus mehreren Schichten aufgebaut sein.

Als "Tissueprodukte" bezeichnet man sämtliche aus Rohtissue hergestellten ein- oder mehrlagigen Endprodukte, die auf die Bedürfnisse des Endverbrauchers ausgerichtet, d.h. mit unterschiedlichstem Anforderungsprofil konfektioniert sind.

Typische Eigenschaften von Tissuepapieren sind die gute Fähigkeit Zugspannungsenergie zu absorbieren, ihre Drapierbarkeit, eine gute textilartige Flexibilität, Eigenschaften, die oft als Knüllweicheit bezeichnet werden, eine hohe Oberflächenweichheit, ein hohes spezifisches Volumen mit einer fühlbaren Dicke, eine möglichst hohe Flüssigkeits-Absorptionsfähigkeit und ja nach Anwendung eine geeignete Nass- und Trockenfestigkeit sowie ein interessantes optisches Erscheinungsbild der äußeren Produktoberfläche. Aufgrund dieser Eigenschaften werden Tissuepapiere zu Tissueprodukten (Tissue-Papierprodukten) verarbeitet und stehen dann dem Endverbraucher in unterschiedlichster Form und Konfektionierung zur Verfügung, beispielsweise als Wischtücher, Handtücher, Haushaltstücher, insbesondere als Küchentücher, als Sanitärprodukte (z.B. Toilettenpapiere), als Papiertaschentücher, Kosmetiktücher oder Servietten.

Für den erfolgreichen Einsatz von Tissueprodukten in den unterschiedlichsten Anwendungs-Bereichen sind, abhängig vom Verwendungszweck, häufig unterschiedliche und zum Teil einander entgegenlaufende Eigenschaften erforderlich.

Tissuepapiere werden heute in der Regel mit drei unterschiedlichen Verfahren hergestellt. Diese Verfahren sind:

- der Nasskrepp-Prozess der Trockenkrepp Prozess und
- das Durchströmtrocknungsverfahren (Through Air Drying).

Die Verfahren unterscheiden sich durch den Aufbau der Tissuemaschine. So wird bei dem Durchströmtrocknungsverfahren die Presse zur mechanischen Entwässerung der Tissuebahn durch Durchströmzylinder, durch die heiße Luft geblasen wird, ersetzt (energetische Trocknung). Auch der Aufbau der sog. Siebpartie, in der die Bahn formiert und teilentwässert wird, kann unterschiedlich sein. Die Blattbildung kann auf nur einem Sieb (Brustwalzenformer) zwischen zwei Sieben (C-Wrap- oder S-Wrap-Former) oder zwischen einem Sieb und einem Filz (Crescent-Former) gebildet werden.

Trotz dieser Unterschiede haben alle Anlagen einen ähnlich aufgebauten sog. konstanten Teil. Dieser unterscheidet sich vornehmlich darin, ob der Stoffauflauf mit nur einer oder mehreren Schichten betrieben wird. Werden nach dem sog. Mehrschichtverfahren mehrschichtige Tissuepapiere hergestellt, müssen einige Aggregate, wie z.B. die Stoffauflaufpumpe, sooft vorhanden sein, wie das fertige Tissuepapier Schichten haben soll.

Der konstante Teil einer Tissuemaschine beginnt mit dem Pulper, in dem getrockneter Zellstoff aufgelöst wird, oder mit einem Stapelturm, in dem bis zu mehrere hundert Kubikmeter Zellstoffsuspension gelagert werden können, und endet am Stoffauflauf. Da in mehreren Kreisläufen Stoff-Wasser-Suspensionen von der Maschine an verschiedene Stellen im konstanten Teil zurückgeführt werden, fallen diese Kreisläufe auch in den Bereich konstanter Teil (z.B. Siebwasser oder Maschinenausschuss). Pulper werden eingesetzt, wenn getrockneter Zellstoff aufgelöst werden soll. Dieser Zellstoff wird in der Regel von einer externen Zellstofffabrik geliefert. Stapeltürme werden eingesetzt, wenn Zellstoff im gleichen Werk hergestellt wird (integrierte Fabrik) oder Altpapier aufbereitet wird. Diese beiden Rohstoffe werden dann vor Einsatz auf der Tissuemaschine nicht getrocknet, sondern nur bis zu einer Stoffdichte von maximal 25 % (250 g Fasern in 1 1 Wasser) entwässert, um die Kreisläufe der Tissuemaschine und der Zellstofffabrik bzw. Altpapieraufbereitung zu trennen.

Als Fasermaterial können bei der Tissueerzeugung die verschiedensten Zellstoffe bzw. Altpapiersorten eingesetzt werden. Sowohl Sulfat- als auch Sulfitzellstoffe kommen zum Einsatz. Die Bleiche kann chlorfrei oder mit chlorbeinhaltenden Chemikalien durchgeführt werden, wie z.B. Hypochlorit. Der Zellstoff wird meistens aus verschiedenen Hölzern (Laub- und Nadelhölzern) hergestellt. Andere Faserstoffe, wie z.B.

CTMP (Chemical Thermo Mechanical Pulp - chemisch mechanischer Holzstoff), können ebenfalls verwendet werden. Die Fasermaterialien können einzeln oder gemischt verwendet werden. Wird ein Mehrschicht-Stoffauflauf verwendet, wird zumeist in den unterschiedlichsten Schichten verschiedenes Fasermaterial eingesetzt. Daher können in

den unterschiedlichen Strängen des konstanten Teiles verschiedene Aggregate zum Einsatz kommen.

Das Fasermaterial hat sowohl einen Einfluss auf die verwendeten Aggregate im konstanten Teil der Tissuemaschine als auch auf die Dosierstelle von verwendeten Chemikalien. Abhängig von der Faserart müssen z.B. mehr oder weniger Reinigungsaggregate (Dickstoffreiniger, Cleaner, Drucksortierer, etc.) verwendet werden. Auch Refiner werden ja nach Faserart unterschiedlich eingesetzt.

Die Tissueherstellung wird durch den Einsatz von Chemikalien unterstützt, verbessert bzw. kontrolliert. Dabei unterscheidet man üblicherweise zwischen Prozesschemikalien, funktionellen Chemikalien, Belagschemikalien für den Yankee-Zylinder und Chemikalien zur Reinigung.

Prozesschemikalien sind u.a. pH-Regulatoren, Entschäumer, Retentions- und Flockungshilfsmittel zur Verbesserung der Faserretention bei der Blattbildung bzw. zum Ausflocken der Fasern in einem Scheibenfilter oder einer Mikroflotation, Störstofffixierer zum Binden von nicht gewünschten Partikeln im System sowie Biozide zur Bekämpfung von Bakterien und zur Vermeidung der Schleimbildung.

Funktionelle Chemikalien dienen u.a. als Nassfestmittel zur Erhöhung der Festigkeit des nassen Tissuepapiers, als Trockenfestmittel zur Erhöhung der Festigkeit des trockenen Tissuepapiers, als sog. Softener/Debonder zur Verbesserung der Oberflächenweichheit und der Verringerung der Steifigkeit des Tissuepapiers, sowie als Farbstoffe und optische Aufheller zur Steigerung des Weißgrades.

Belagschemikalien für den Yankee-Zylinder werden u.a. zur Steuerung der Adhäsion des Tissuepapiers am Yankee-Zylinder eingesetzt, wobei die Zahl der verwendeten Chemikalien üblicherweise zwischen eins und etwa fünf variieren kann.

Geeignete Chemikalien zur Reinigung sind u.a. organische und anorganische Säuren und Laugen. Diese werden üblicherweise zur Reinigung der Siebe und Filze in der Tissuemaschine eingesetzt.

Der Einsatzort derartiger Chemikalien und damit auch der erfindungsgemäß als Nassfestmittel zu verwendeten Pfropfcopolymere innerhalb der Tissuemaschine können sehr unterschiedlich sein. Üblicherweise sollen aber die funktionellen Chemikalien und damit auch die beschriebenen Pfropfcopolymere an einer Stelle zudosiert werden, an der unmittelbar nach ihrer Dosierung eine gute Durchmischung mit der Fasersuspension erfolgt. Geeignete Stellen der Tissuemaschine sind daher u.a. der Schnellmischer, der Stoffniveaukasten oder Stutzen unmittelbar vor Pumpen. Weitere mögliche Zugabeorte liegen sowohl im Nassteil der Tissuemaschine, am Ende der Siebpartie, vor oder innerhalb der Pressenpartie, sowie in der nach der Pressenpartie angeordneten Trockenpartie. Darüber hinaus besteht auch die Möglichkeit, Behandlungschemikalien wie z.B. Nassfestmittel durch Sprühauftrag auf den Yankee-Zylinder zu applizieren. Die Zugabe solcher Behandlungschemikalien kann auch auf den Pope-Roller unter Erzeugung eines Behandlungsmittelfilms erfolgen, der anschließend auf die Tissuebahn während des Aufrollvorgangs transferiert wird. Behandlungschemikalien können auch innerhalb von Doubliermaschinen bzw. innerhalb von Verarbeitungsmaschinen auf die Außenlagen des Tissuepapiers bzw. des Tissueprodukts zugegeben werden.

Die Dosierstelle ist nicht nur abhängig von den im konstanten Teil enthaltenen Aggregaten, sondern auch von dem verwendeten Fasermaterial, der Prozesswasserqualität (pH-Wert, Wasserhärte, Leitfähigkeit, etc.) sowie dem Einsatz verschiedener Chemikalien an der gleichen Tissuemaschine. Werden beispielsweise Nassfestmittel zusammen mit Trockenfestmitteln und/oder Softenern eingesetzt, muss darauf geachtet werden, dass beide oder alle drei Chemikalien auf die Faser aufziehen können, und die Dosierstellen müssen so gewählt werden, dass die Chemikalien nicht miteinander reagieren können, bevor sie auf den Fasern fixiert sind.

Auch die Reaktionszeit mit dem Fasermaterial kann unterschiedlich lange sein. Daher kann die Dosierstelle je nach eingesetztem Fasermaterial näher und weiter entfernt vom Stoffauflauf liegen.

Sind die eingesetzten Chemikalien empfindlich gegen Scherbeanspruchung, muss darauf geachtet werden, dass keine Aggregate zwischen der Dosierstelle und dem Stoffauflauf liegen, in den die Chemikalie wieder von den Fasern abgeschert werden kann.

Anhand der nachfolgenden Beispiele soll der anmeldungsgemäße Gegenstand näher erläutert werden, ohne diesen auf die hier gezeigten Ausführungsbeispiele zu beschränken.

Fig. 1 zeigt die flächenbezogene Masse der nach den Beispielen hergestellten Pfropfcopolymere im Vergleich zu einem Nassfestmittel des Standes der Technik.

Fig. 2 zeigt die Reißlänge im trockenen Zustand der Pfropfcopolymere gemäß den Beispielen 2 bis 9 im Vergleich zu einem Nassfestmittel des Standes der Technik.

Fig. 3 zeigt die Reißlänge im nassen Zustand der Pfropfcopolymere gemäß den Beispielen 2 bis 9 im Vergleich zu einem Nassfestmittel des Standes der Technik.

Fig. 4 zeigt die relative Nassfeuchtigkeit der Pfropfcopolymere nach den Beispielen 2 bis 9 im Vergleich zu einem Nassfestmittel des Standes der Technik.

**Beispiel 1: Synthese von Epoxy-terminierten Methoxy-poly(ethylenglykol)-glycidylether (MPEG)**

Polyethylenglykolmonomethylether (Fluka, 35 g; M = 350 g/mol; 0,1 mol) wurde zu einer Mischung aus Epichlorhydrin (Aldrich, 27,76 g; 0,3 mol; M = 92,53 g/mol, Sdp.: 115-117°C), Natriumhydroxyd (3,2 g; 0,08 mol; M = 40 g/mol) und Wasser (0,5 ml) gegeben und für 16 h auf 60°C unter Argonatmosphäre erhitzt. Danach wurde für 1,5 h auf 90°C erwärmt.

Das Reaktionsgemisch wurde in 150 ml Chloroform gelöst und mit 100 ml Wasser versetzt. Durch Zugabe von Natriumdihydrogenphosphat ($NaH_2PO_4$) wurde die wässrige Phase auf einen pH-Wert von 7 eingestellt. Der ausgefallene Feststoff wurde abfiltriert und verworfen. Nach Abtrennen der wässrigen Phase wurde die organische Phase zweimal mit 50 ml Wasser gewaschen und anschließend mit Natriumsulfat getrocknet. Anschließend wurde das Chloroform im Vakuum abdestilliert. Im Produkt verbliebenene Epichlorhydrin-Rückstände wurden im Hochvakuum bei $10^{-2}$-$10^{-3}$ mbar entfernt. Zur Überprüfung der vollständigen Entfernung von Epichlorhydrin wurde eine Probe im wässrigen, basischen Milieu erwärmt, dann mit Salpetersäure angesäuert und mit Silbernitrat versetzt. Der Test war negativ (keine Fällung von Silberchlorid) was eine Halogenfreiheit des Produkts bedeutet.

**Beispiel 2: Synthese von PEI-graft-PEG**

Zu einer Lösung aus Methoxy-poly(ethylenglykol)-glycidylether (aus Beispiel 1) (12,0 g; 0,03 mol; Mw = 400 g/mol) in 10 ml Methanol wurde eine Lösung aus Polyethylenimin (Aldrich, Mw = 40000 g/mol, 14,9 g, 0,0006 mol) in 30 ml Methanol gegeben. Die homogene Mischung wurde 12 h unter Rückfluss gerührt. Anschließend wurde das Reaktionsgemisch durch Dialyse gegen Wasser (Dialyseschlauch ZelluTrans von Roth, MWCO 40006000 g/mol) aufgereinigt. Das resultierende Pfropfcopolymer wurde durch Gefriertrocknung isoliert.

**Beispiel 3: Synthese von PEI-graft-PEG**

Zu einer Lösung aus Methoxy-poly(ethylenglykol)-glycidylether) (aus Beispiel 1) (10,0 g; 0,025 mol; Mw = 400 g/mol) in 10 ml Methanol wurde eine Lösung aus Polyethylenimin (Aldrich, Mw = 40000 g/mol, 20,0 g, 0,0005 mol) in 30 ml Methanol gegeben. Die homogene Mischung wurde 12 h unter Rückfluss gerührt. Anschließend wurde das Reaktionsgemisch durch Dialyse gegen Wasser (Dialyseschlauch ZelluTrans von Roth, MWCO 40006000 g/mol) aufgereinigt. Das resultierende Pfropfcopolymer wurde durch Gefriertrocknung isoliert.

**Beispiel 4: Synthese von PEI-graft-PEG (PEI-PEG 3)**

Zu einer Lösung aus Methoxy-poly(ethylenglykol)-glycidylether) (aus Beispiel 1) (0,4 g; 0,001 mol; Mw = 400 g/mol) in 10 ml Methanol wurde eine Lösung aus Polyethylenimin (Aldrich, Mw = 40000 g/mol, 8,0 g, 0,0002 mol) in 30 ml Methanol gegeben. Die homogene Mischung wurde 12 h unter Rückfluss gerührt. Anschließend wurde das Reaktionsgemisch durch Dialyse gegen Wasser (Dialyseschlauch ZelluTrans von Roth, MWCO 40006000 g/mol) aufgereinigt. Das resultierende Pfropfcopolymer wurde durch Gefriertrocknung isoliert.

Ausbeute: 74 % d. Th

**Beispiel 5: PEI-PEG 7**

Zu einer Lösung aus Methoxy-poly(ethylenglykol)-glycidylethyer) (aus Beispiel 1) (0,88 g; 0,0022 mol; Mw = 400 g/mol) in 10 ml Methanol wurde eine Lösung aus Polyethylenimin (Aldrich, Mw = 40000 g/mol, 8,0 g, 0,0002 mol) in 30 ml Methanol gegeben. Die homogene Mischung wurde 12 h unter Rückfluss gerührt. Anschließend wurde das Reaktionsgemisch durch Dialyse gegen Wasser (Dialyseschlauch ZelluTrans von Roth, MWCO 4000-6000 g/mol) aufgereinigt. Das resultierende Pfropfcopolymer wurde durch Gefriertrocknung isoliert.

Ausbeute: 90 % d. Th

**Beispiel 6: PEI-PEG 14**

Zu einer Lösung aus Methoxy-poly(ethylenglykol)-glycidylether) (aus Beispiel 1) (1,76 g; 0,0044 mol; Mw = 400 g/mol) in 10 ml Methanol wurde eine Lösung aus Polyethylenimin (Aldrich, Mw = 40000 g/mol, 8,0 g, 0,0002 mol) in 30 ml Methanol gegeben. Die homogene Mischung wurde 12 h unter Rückfluss gerührt. Anschließend wurde das Reaktionsgemisch durch Dialyse gegen Wasser (Dialyseschlauch ZelluTrans von Roth, MWCO 4000-6000 g/mol) aufgereinigt. Das resultierende Pfropfcopolymer wurde durch Gefriertrocknung isoliert.

Ausbeute : 82 % d. Th

**Beispiel 7: PEI-PEG 20**

Zu einer Lösung aus Methoxy-poly(ethylenglykol)-glycidylether) (aus Beispiel 1) (6,00 g; 0,015 Mol; Mw = 400 g/mol) in 10 ml Methanol wurde eine Lösung aus Polyethylenimin (Aldrich, Mw = 40000 g/mol, 20,0 g, 0,0005 Mol) in 30 ml Methanol gegeben. Die homogene Mischung wurde 12 h unter Rückfluss gerührt. Anschließend wurde das Reaktionsgemisch durch Dialyse gegen Wasser (Dialyseschlauch ZelluTrans von Roth, MWCO 4000-6000 g/mol) aufgereinigt. Das resultierende Pfropfcopolymer wurde durch Gefriertrocknung isoliert.
Ausbeute: 75 % d. Th.

**Beispiel 8: PEI-PEG hochmolekular**

Zu einer Lösung aus Methoxypoly(ethylenglykol)-glycidylether) (aus Beispiel 1) (4,8 g; 0,012 Mol, Mw = 400 g/mol) in 10 ml einer wässrigen 0,1 M NaCl-Lösung wurde eine Lösung aus hochmolekularem Polyethylenimin (Fluka, Mw = 800000 g/mol, 16,0 g einer 50% wässrigen Lösung, $1x10^{-5}$ Mol) in 30 ml einer 0,1 M wässrigen NaClLösung gegeben. Die homogene Mischung wurde 12 h unter Rückfluss gerührt. Anschließend wurde das Reaktionsgemisch durch Dialyse gegen Wasser (Dialyseschlauch ZelluTrans von Roth, MWCO 4000-6000 g/mol) aufgereinigt. Das resultierende Pfropfcopolymer wurde durch Gefriertrocknung isoliert.
Ausbeute: 59 % d. Th.

**Beispiel 9: Herstellung eines Pfropfcopolymers über Peptidkupplung einer PEG-carbonsäure mit PEI (PEG-COOH- g-PEI)**

In einem 100 ml Dreihalskolben, wurden 0,72 g PEG600-di-säure (Fluka, M = 600 g/mol; $1,210^{-3}$ mol) und 575,1 mg N-(3-Dimethylaminopropyl)-N'-ethylcarbodiimidhydrochlorid(Merck, $310^{-3}$ Mol) in 10 ml dest. Wasser gelöst. Anschließend wurde die Lösung mit 345,3 mg N-Hydroxysuccinimid (Fluka, $310^{-3}$ mol) versetzt. Nach 10 Minuten wurden 4,0 g Polyethylenimin (Aldrich, MW = 40000 g/mol; $110^{-4}$ Mol) in 20 ml $H_2O$ zugesetzt und bei 20°C 12 h gerührt. Anschließend wurde das Reaktionsgemisch durch Dialyse gegen Wasser (Dialyseschlauch ZelluTrans von Roth, MWCO 4000-6000 g/mol) aufgereinigt. Das resultierende Pfropfcopolymer wurde durch Gefriertrocknung isoliert.
Ausbeute: 55 % d. Th.

**Beispiel 10: Blattbildungstests mit den in A hergestellten Pfropfcopolymeren**

Die Laborblattbildung erfolgte nach dem Rapid-Köthen-Verfahren. Die Herstellung der Laborblätter erfolgte nach DIN EN ISO 5269-2: 1998. Der Rapid-Köthen-Laborblattbildner besteht aus einer Blattbildungseinrichtung, den Übertragungselementen und mehreren Vakuum-Trocknern. Prinzipiell wird aus einer Fasersuspension auf einem Siebtuch durch Saugwirkung ein kreisrundes Laborblatt gebildet. Das Blatt wird anschließend unter definierten Bedingungen getrocknet.
Die flächenbezogene Masse des gebildeten Blattes beträgt 75 $\pm$ 2 $g/m^2$ otro (ofentrocken), das bedeutet, dass ein Blatt eine Masse von 2,36 g $\pm$ 0.06 g aufweist.
Der für die Untersuchungen eingesetzte Zellstoff war nichtvorgetrockneter Fichtensulfit-Zellstoff (Zellstofffabrik Mannheim) mit einem Mahlgrad von 15 SR.
Zur Herstellung der Laborblätter wurde eine Zellstoff-Suspension mit einer Stoffdichte von 0,236 % verwendet. Die zu untersuchenden Chemikalien wurden in einer 2,5%igen Lösung einem Liter der ZellstoffSuspension zugegeben, bis Konzentrationen von 3,6 und 9 kg/t eingestellt waren. Die Reaktionszeit betrug unter konstantem Rühren stets 2 min, danach erfolgte die Laborblattbildung nach dem genannten Verfahren. Zur Untersuchung wurden die Laborblätter auf Normbedingungen (23°C, 50 % rel. Feuchte) klimatisiert (DIN EN 20187 1993).
Die Festigkeit (Bruchkraft) von Papier ist die beim Zugversuch gemessene Kraft im Augenblick des Bruches der Probe. Um Schwankungen der flächenbezogenen Masse zu minimieren, wird aus der Bruchkraft die Reißlänge nach folgender Formel ermittelt: Reißlänge = $10^6$ x Bruchkraft/(flächenbezogene Masse x Streifenbreite x Erdbeschleunigung) [m].
Die verwendeten Proben hatten eine Breite von 15 mm, die freie Einspannlänge betrug 100 mm. Die Prüfung erfolgte in Anlehnung an DIN EN ISO 1924-2 1994-04. Nassbruchlasten wurden an Papieren geprüft, die zuvor 30 s in destilliertes Wasser getaucht wurden (DIN ISO 3781 1994-10).
Zur Bestimmung der relativen Nassfestigkeit wurde das Verhältnis der Reißlänge im feuchten Zustand zur trocken Reißlänge gebildet:

$$\text{Rel. Nassfestigkeit} = \text{Bruchkraft (nass)} / \text{Bruchkraft (trocken)} \times 100 (\%)$$

Die Ergebnisse der nach den Beispielen 2 bis 9 hergestellten Chemikalien sind im Vergleich zu einem Standard Nassfestmittel (PAAE) am Laborblatt getestet worden und in den Figuren 1 bis 4 und der Tabelle 1 dargestellt.

Tabelle 1

| | Dosiermenge (kg/t) | Flächenbezogene Masse (g/m$^2$) | Reißlänge Trocken (m) | Reißlänge Nass (m) | Relative Nassfestigkeit (%) |
|---|---|---|---|---|---|
| PAAE | 3<br>6<br>9 | 78,0<br>79,0<br>78,0 | 5012<br>5304<br>5456 | 635<br>955<br>1088 | 12,7<br>18,0<br>19,9 |
| Beispiel 2 | 3<br>6<br>9 | 77,1<br>77,1<br>76,8 | 4832<br>5194<br>5130 | 167<br>508<br>626 | 3,4<br>9,8<br>12,2 |
| Beispiel 3 | 3<br>6<br>9 | 75,5<br>77,1<br>77,1 | 5082<br>5137<br>5075 | 213<br>509<br>661 | 4,2<br>9,9<br>13,0 |
| Beispiel 4 | 3<br>6<br>9 | 76,1<br>75,8<br>75,2 | 5272<br>5122<br>5274 | 270<br>627<br>789 | 5,1<br>12,2<br>15,0 |
| Beispiel 5 | 3<br>6<br>9 | 75,5<br>72,9<br>74,8 | 5040<br>5142<br>5366 | 339<br>686<br>731 | 6,7<br>13,3<br>13,6 |
| Beispiel 6 | 3<br>6<br>9 | 74,8<br>74,5<br>77,4 | 5274<br>5164<br>5409 | 327<br>631<br>753 | 6,2<br>12,2<br>13,9 |
| Beispiel 7 | 3<br>6<br>9 | 77,1<br>75,5<br>76,4 | 5024<br>5283<br>4996 | 281<br>599<br>643 | 5,6<br>11,3<br>12,9 |
| Beispiel 8 | 3<br>6<br>9 | 75,2<br>75,8<br>75,8 | 4990<br>5332<br>5463 | 347<br>655<br>805 | 7,0<br>12,3<br>14,7 |
| Beispiel 9 | 3<br>6<br>9 | 75,2<br>74,5<br>75,2 | 5444<br>5762<br>5588 | 484<br>800<br>1027 | 8,9<br>13,9<br>18,4 |

## Patentansprüche

1. Papiererzeugnis mit erhöhter relativer Nassreißfestigkeit und Weichheit enthaltend Cellulosefasern, die mit einem Pfropfcopolymer aus einem Polyethylenimin-Segment der allgemeinen Formel I

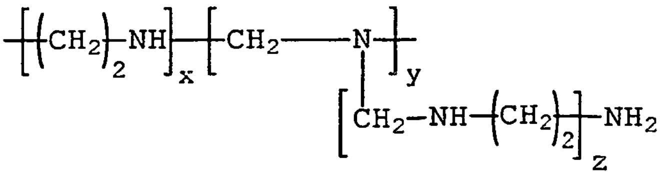

I

wobei x, y und z so gewählt sind, dass die Molmasse im Bereich von 1000 bis 2000000 D liegt, sowie mindestens einem Polyalkylenoxid- und/oder mindestens einem Polyalkylenglykol-Segment der allgemeinen Formel II

II

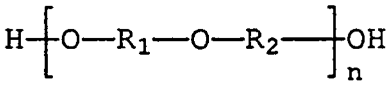

mit $R_1$ und $R_2$ unabhängig voneinander $C_1$-$C_{12}$-Alkyl und n so gewählt ist, dass dessen Molmasse im Bereich von 350 bis 2000000 D liegt, vernetzt sind.

**2.** Papiererzeugnis nach Anspruch 1,
**dadurch gekennzeichnet, dass** das Pfropfcopolymer ein Rückgrat aus Polyethylenimin und Pfröpfe aus mindestens einem Polyalkylenoxid und/oder mindestens einem Polyalkylenglykol aufweist.

**3.** Papiererzeugnis nach Anspruch 1,
**dadurch gekennzeichnet, dass** das Pfropfcopolymer ein Rückgrat aus mindestens einem Polyalkylenoxid und/oder mindestens einem Polyalkylenglykol und Pfröpfe aus Polyethylenimin aufweist.

**4.** Papiererzeugnis nach einem der vorhergehenden Ansprüche,
**dadurch gekennzeichnet, dass** das Polyethylenimin linear ist.

**5.** Papiererzeugnis nach einem der vorhergehenden Ansprüche,
**dadurch gekennzeichnet, dass** das Polyethylenimin verzweigt ist.

**6.** Papiererzeugnis nach einem der vorhergehenden Ansprüche,
**dadurch gekennzeichnet, dass** das Polyethylenimin eine Molmasse im Bereich von 20000 bis 1000000 D aufweist.

**7.** Papiererzeugnis nach einem der vorhergehenden Ansprüche,
**dadurch gekennzeichnet, dass** das Polyalkylenglykol Polyethylenglykol ist.

**8.** Papiererzeugnis nach einem der vorhergehenden Ansprüche,
**dadurch gekennzeichnet, dass** das Polyalkylenoxid Polyethylenoxid ist.

**9.** Papiererzeugnis nach einem der vorhergehenden Ansprüche,
**dadurch gekennzeichnet, dass** das Polyalkylenglykol und/oder das Polyalkylen oxid eine Molmasse im Bereich von 350 bis 1000000 D, insbesondere von 350 bis 80000 D aufweist.

**10.** Papiererzeugnis nach einem der vorhergehenden Ansprüche,
**dadurch gekennzeichnet, dass** eine terminale Hydroxylgruppe des Polyalkylenoxids und/oder Polyalkylenglykols blockiert ist.

**11.** Papiererzeugnis nach dem vorhergehenden Anspruch,
**dadurch gekennzeichnet, dass** die terminale Hydroxygruppe mit einer Methoxy-, Ethoxy-, Propyloxy-, Butyloxy- und/oder Benzyloxy-Gruppe blockiert ist.

**12.** Verfahren zur Herstellung flächiger Papiererzeugnisse mit erhöhter relativer Nassreißfestigkeit und Weichheit, insbesondere Tissueprodukten, aus einer Zellstoffsuspension, bei dem der Zellstoffsuspension ein Pfropfcopolymer

aus einem Polyethylenimin-Segment der allgemeinen Formel I

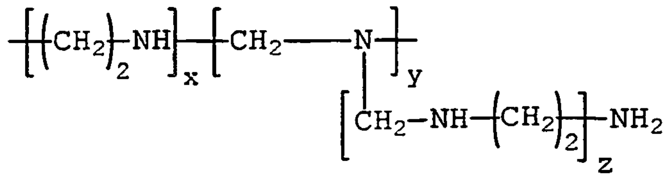

I

wobei x, y und z so gewählt sind, dass die Molmasse im Bereich von 1000 bis 2000000 D liegt, sowie mindestens einem Polyalkylenoxid- und/oder mindestens einem Polyalkylenglykol-Segment der allgemeinen Formel II

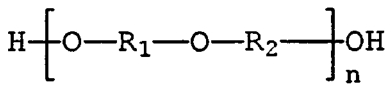

II

mit $R_1$ und $R_2$ unabhängig voneinander $C_1$-$C_{12}$-Alkyl und n so gewählt ist, dass dessen Molmasse im Bereich von 350 bis 2000000 D liegt,
zugesetzt wird und/oder das Papiererzeugnis während seiner Herstellung oder nachträglich mit dem Pfropfcopolymer behandelt wird.

**13.** Verfahren nach Anspruch 12,
**dadurch gekennzeichnet, dass** das Pfropfcopolymer ein Rückgrat aus Polyethylenimin und Pfröpfe aus mindestens einem Polyalkylenoxid und/oder mindestens einem Polyalkylenglykol aufweist.

**14.** Verfahren nach Anspruch 12,
**dadurch gekennzeichnet, dass** das Pfropfcopolymer ein Rückgrat aus mindestens einem Polyalkylenoxid und/oder mindestens einem Polyalkylenglykol und Pfröpfe aus Polyethylenimin aufweist.

**15.** Verfahren nach einem der Ansprüche 12 bis 14,
**dadurch gekennzeichnet, dass** als Polyalkylenglykol Polyethylenglykol eingesetzt wird.

**16.** Verfahren nach einem der Ansprüche 12 bis 15,
**dadurch gekennzeichnet, dass** als Polyalkylenoxid Polyethylenoxid eingesetzt wird.

**17.** Verfahren nach einem der Ansprüche 12 bis 16,
**dadurch gekennzeichnet, dass** der Anteil an Polyethylenimin, bezogen auf die Ausgangsverbindungen, größer als 50 Gew.-% ist.

**18.** Verfahren nach Anspruch 17,
**dadurch gekennzeichnet, dass** der Anteil an Polyethylenimin, bezogen auf die Ausgangsverbindungen, größer als 80 Gew.-% ist.

**19.** Verfahren nach Anspruch 17 oder 18,
**dadurch gekennzeichnet, dass** der Anteil an Polyethylenimin, bezogen auf die Ausgangsverbindungen, größer als 90 Gew.-% ist.

**20.** Verfahren nach einem der Ansprüche 12 bis 19,
**dadurch gekennzeichnet, dass** eine terminale Hydroxylgruppe des Polyalkylenoxids und/oder Polyalkylenglykols blockiert wird.

**21.** Verfahren nach dem vorhergehenden Anspruch,
**dadurch gekennzeichnet, dass** zur Blockierung eine Methoxy-, Ethoxy-, Propyloxy-, Butyloxy- und/oder Benzyloxy-Gruppe eingesetzt wird.

**22.** Verfahren nach einem der Ansprüche 12 bis 21,
**dadurch gekennzeichnet, dass** eine freie terminale Hydroxygruppe des Polyalkylenoxids und/oder Polyalkylenglykols mit einem Epihalogenhydrin in einen Polyethylenglykolglyciylether überführt wird, der über die Amingruppen an das Polyethylenimin gepfropft wird.

**23.** Verwendung der Papiererzeugnisse nach einem der Ansprüche 1 bis 11 als Tissue-Produkt.

## Claims

**1.** Paper product with increased relative wet tensile strength and softness, comprising cellulose fibres wetted with a graft copolymer consisting of a polyethylene imine segment with the general formula I

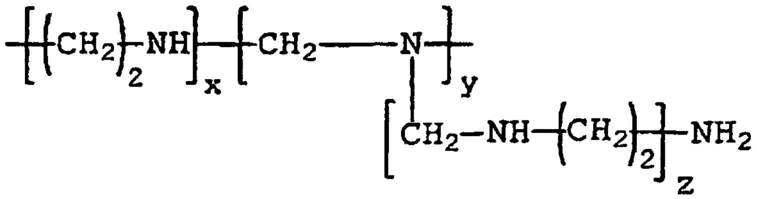

I

whereby x, y and z are selected in such a way that the mol mass is within a range of 1000 to 2000000 D, as well as at least one polyalkylene oxide and/or at least one polyalkylene glycol segment with the general formula II

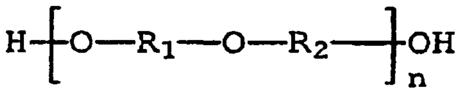

II

with $R_1$ and $R_2$ being independent from each other and $C_1$-$C_{12}$-alkyl and n being selected in such a way that the mol mass of the same is within a range of 350 to 2000000 D.

**2.** Paper product according to Claim 1, **characterised in that** the graft copolymer comprises a backbone of polyethylene imine and grafts of at least one polyalkylene oxide and/or at least one polyalkylene glycol.

**3.** Paper product according to Claim 1, **characterised in that** the graft copolymer comprises a backbone of at least one polyalkylene oxide and/or at least one polyalkylene glycol and grafts of polyethylene amine.

**4.** Paper product according to one of the preceding Claims, **characterised in that** the polyethylene imine is linear.

**5.** Paper product according to one of the preceding Claims, **characterised in that** the polyethylene imine is branched.

**6.** Paper product according to one of the preceding Claims, **characterised in that** the polyethylene imine has a mol mass within a range of 20000 to 1000000 D.

**7.** Paper product according to one of the preceding Claims, **characterised in that** the polyalkylene glycol is polyethylene glycol.

**8.** Paper product according to one of the preceding Claims, **characterised in that** the polyalkylene oxide is polyethylene oxide.

**9.** Paper product according to one of the preceding Claims, **characterised in that** the polyalkylene glycol and/or the polyalkylene oxide has a mol mass within a range of 350 to 1000000 D, in particular of 350 to 80000 D.

**10.** Paper product according to one of the preceding Claims, **characterised in that** a terminal hydroxyl group of the

polyalkylene oxide and/or polyalkylene glycol is blocked.

**11.** Paper product according to one of the preceding Claims, **characterised in that** the terminal hydroxy group is blocked with a methoxy, ethoxy, propyloxy, butyloxy and/or a benzyloxy group.

**12.** Method for producing flat paper products with increased relative wet tensile strength and softness, in particular tissue products, from a cellulose suspension, whereby the cellulose suspension is admixed with a graft copolymer consisting of a polyethylene imine segment with the general formula I

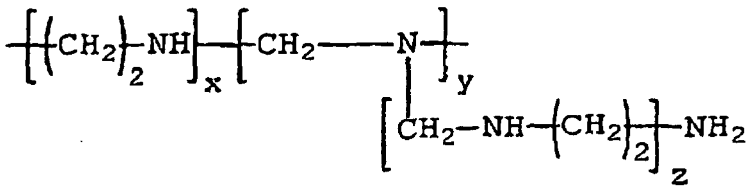

I

whereby x, y and z are selected in such a way that the mol mass in within a range of 1000 to 2000000 D, as well as at least one polyalkylene oxide and/or at least one polyalkylene glycol segment with the general formula II

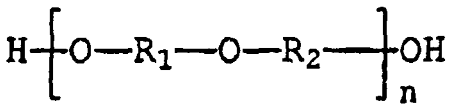

II

with $R_1$ and $R_2$ being independent from each other and $C_1$-$C_{12}$-alkyl and n being selected in such a way that the mol mass of the same is within a range of 350 to 2000000 D, and/or the paper product is treated with the graft copolymer during its production or following the same.

**13.** Method according to Claim 12, **characterised in that** the graft copolymer comprises a backbone of polyethylene imine and grafts of at least one polyalkylene oxide and/or at least one polyalkylene glycol.

**14.** Method according to Claim 12" **characterised in that** the graft copolymer comprises a backbone of at least one polyalkylene oxide and/or at least one polyalkylene glycol as well as grafts of polyethylene imine.

**15.** Method according to one of the Claims 12 to 14, **characterised in that** polyethylene glycol is used as the polyalkylene glycol.

**16.** Method according to one of the Claims 12 to 15, **characterised in that** polyethylene oxide is used as the polyalkylene oxide.

**17.** Method according to one of the Claims 12 to 16, **characterised in that** the proportion of polyethylene imine is greater than 50 wt. % in relation to the starting compounds.

**18.** Method according to Claim 17, **characterised in that** the proportion of polyethylene imine is greater than 80 wt. % in relation to the starting compounds.

**19.** Method according to Claim 17 or 18, **characterised in that** the proportion of polyethylene imine is greater than 90 wt. % in relation to the starting compounds.

**20.** Method according to one of the Claims 12 to 19, **characterised in that** a terminal hydroxyl group of the polyalkylene oxide and/or the polyalkylene glycol is blocked.

**21.** Method according to one of the preceding Claims, **characterised in that** a methoxy, ethoxy, propyloxy, butyloxy and/or benzyloxy group is used for blocking.

**22.** Method according to one of the preceding Claims 12 to 21, **characterised in that** a free terminal hydroxy group of the polyalkylene oxide and/or polyalkylene glycol is transformed into a polyethylene glycol glycil ether grafted to the polyethylene imine via the amine groups with an epihalogenhydrine.

**23.** Use of the paper products according to Claims 1 to 11 as tissue products.

## Revendications

**1.** Article en papier présentant une résistance à la déchirure à l'état humide relative et une souplesse accrues, contenant des fibres de cellulose qui sont réticulées avec un copolymère greffé constitué d'un segment de polyéthylène-imine de formule générale I :

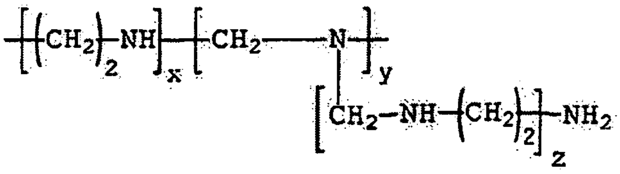

I

dans laquelle x, y et z sont choisis de sorte que la masse molaire se situe dans la plage de 1000 à 2 000 000 D, et d'au moins un segment de poly(oxyde d'alkylène) et/ou d'au moins un segment de polyalkylèneglycol de formule générale II :

II

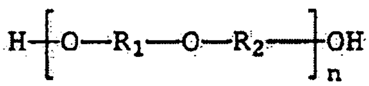

dans laquelle $R_1$ et $R_2$ représentent, indépendamment l'un de l'autre, un alkyle en $C_1$-$C_{12}$ et n est choisi de sorte que sa masse molaire se situe dans une plage de 350 à 2 000 000 D.

**2.** Article en papier selon la revendication 1,
**caractérisé en ce que** le copolymère greffé présente une ossature constituée de polyéthylène-imine et de polymères greffés composés d'au moins un poly(oxyde d'alkylène) et/ou d'au moins un polyalkylèneglycol.

**3.** Article en papier selon la revendication 1,
**caractérisé en ce que** le copolymère greffé présente une ossature constituée d'au moins un poly(oxyde d'alkylène) et/ou d'au moins un polyalkylèneglycol et de polymères greffés composés de polyéthylène-imine.

**4.** Article en papier selon l'une quelconque des revendications précédentes,
**caractérisé en ce que** la polyéthylène-imine est linéaire.

**5.** Article en papier selon l'une quelconque des revendications précédentes,
**caractérisé en ce que** la polyéthylène-imine est ramifiée.

**6.** Article en papier selon l'une quelconque des revendications précédentes,
**caractérisé en ce que** la polyéthylène-imine présente une masse molaire dans la plage de 20 000 à 1 000 000 D.

**7.** Article en papier selon l'une quelconque des revendications précédentes,
**caractérisé en ce que** le polyalkylèneglycol est le polyéthylèneglycol.

**8.** Article en papier selon l'une quelconque des revendications précédentes,
**caractérisé en ce que** le poly(oxyde d'alkylène) est le poly(oxyde d'éthylène).

**9.** Article en papier selon l'une quelconque des revendications précédentes,
**caractérisé en ce que** le polyalkylèneglycol et/ou le poly(oxyde d'alkylène) présente une masse molaire dans la

plage de 350 à 1 000 000 D, en particulier, de 350 à 80 000 D.

**10.** Article en papier selon l'une quelconque des revendications précédentes,
**caractérisé en ce qu'**un groupement hydroxyle terminal du poly(oxyde d'alkylène) et/ou du polyalkylèneglycol est bloqué.

**11.** Article en papier selon la revendication précédente,
**caractérisé en ce que** le groupement hydroxyle terminal est bloqué par un groupement méthoxy, éthoxy, propyloxy, butyloxy et/ou benzyloxy.

**12.** Procédé de fabrication d'articles plats en papier, présentant une résistance à la déchirure à l'état humide relative et une souplesse accrues, en particulier, des articles en papier de soie, à partir d'une suspension de pâte de cellulose, dans lequel on ajoute à la suspension de pâte de cellulose un copolymère greffé constitué d'un segment de polyéthylène-imine de formule générale I :

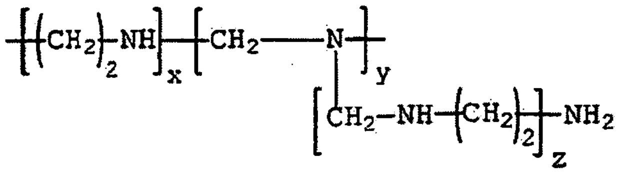

I

dans laquelle x, y et z sont choisis de sorte que la masse molaire se situe dans la plage de 1000 à 2 000 000 D, et d'au moins un segment de poly(oxyde d'alkylène) et/ou d'au moins un segment de polyalkylèneglycol de formule générale II :

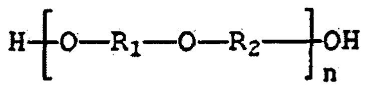

II

dans laquelle $R_1$ et $R_2$ représentent, indépendamment l'un de l'autre, un alkyle en $C_1$-$C_{12}$ et n est choisi de sorte que sa masse molaire se situe dans la plage de 350 à 2 000 000 D,
et/ou on traite l'article en papier au cours de sa fabrication, ou ultérieurement, avec le copolymère greffé.

**13.** Procédé selon la revendication 12,
**caractérisé en ce que** le copolymère greffé présente une ossature constituée de polyéthylène-imine et de polymères greffés composés d'au moins un poly(oxyde d'alkylène) et/ou d'au moins un polyalkylèneglycol.

**14.** Procédé selon la revendication 12,
**caractérisé en ce que** le copolymère greffé présente une ossature constituée d'au moins un poly(oxyde d'alkylène) et/ou d'au moins un polyalkylèneglycol et de polymères greffés composés de polyéthylène-imine.

**15.** Procédé selon l'une quelconque des revendications 12 à 14,
**caractérisé en ce que** l'on utilise le polyéthylèneglycol comme polyalkylèneglycol.

**16.** Procédé selon l'une quelconque des revendications 12 à 15,
**caractérisé en ce que** l'on utilise du poly(oxyde d'éthylène) comme poly(oxyde d'alkylène).

**17.** Procédé selon l'une quelconque des revendications 12 à 16,
**caractérisé en ce que** la fraction de polyéthylène-imine par rapport aux composés de départ, est supérieure à 50 % en poids.

**18.** Procédé selon la revendication 17,
**caractérisé en ce que** la fraction de polyéthylène-imine par rapport aux composés de départ, est supérieure à 80 % en poids.

**19.** Procédé selon la revendication 17 ou 18,
**caractérisé en ce que** la fraction de polyéthylène-imine par rapport aux composés de départ, est supérieure à 90 % en poids.

**20.** Procédé selon l'une quelconque des revendications 12 à 19,
**caractérisé en ce qu'**un groupement hydroxyle terminal du poly(oxyde d'alkylène) et/ou du polyalkylèneglycol est bloqué.

**21.** Procédé selon la revendication précédente,
**caractérisé en ce que** l'on utilise pour le blocage un groupement méthoxy, éthoxy, propyloxy, butyloxy et/ou benzyloxy.

**22.** Procédé selon l'une quelconque des revendications 12 à 21,
**caractérisé en ce que** l'on transforme un groupement hydroxyle terminal libre du poly(oxyde d'alkylène) et/ou du polyalkylèneglycol avec une épihalogénohydrine en polyéthylèneglycolglycidyléther, que l'on greffe sur les groupements amine de la polyéthylène-imine.

**23.** Utilisation des articles en papier selon l'une quelconque des revendications 1 à 11, comme produit en papier de soie.

Fig. 1

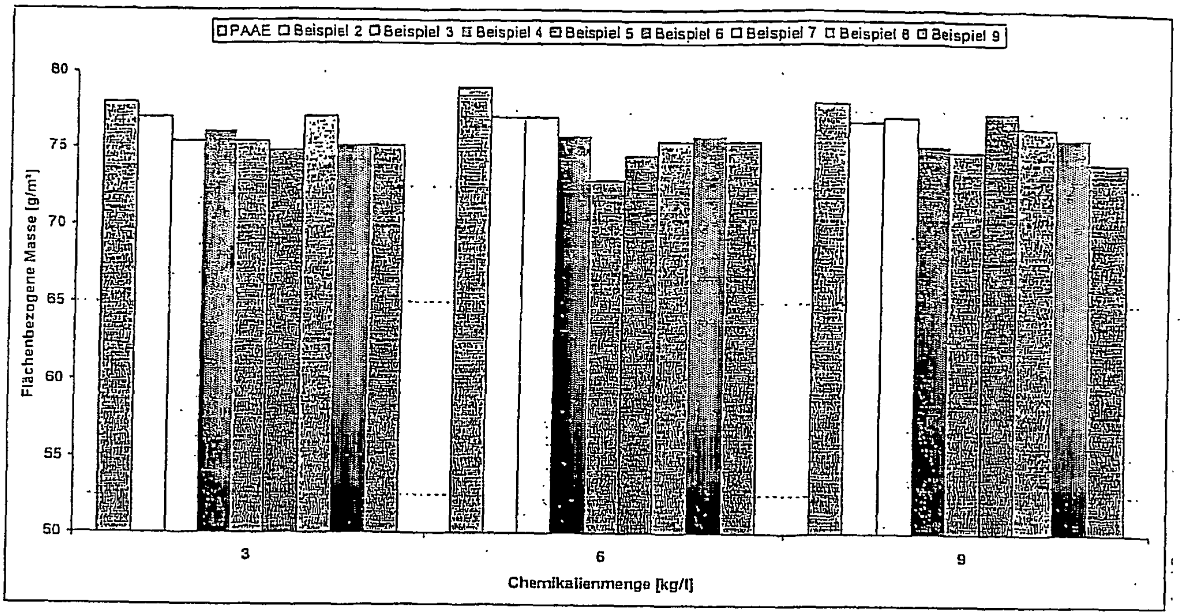


Abb.1: Flächenbezogene Masse

Fig. 2

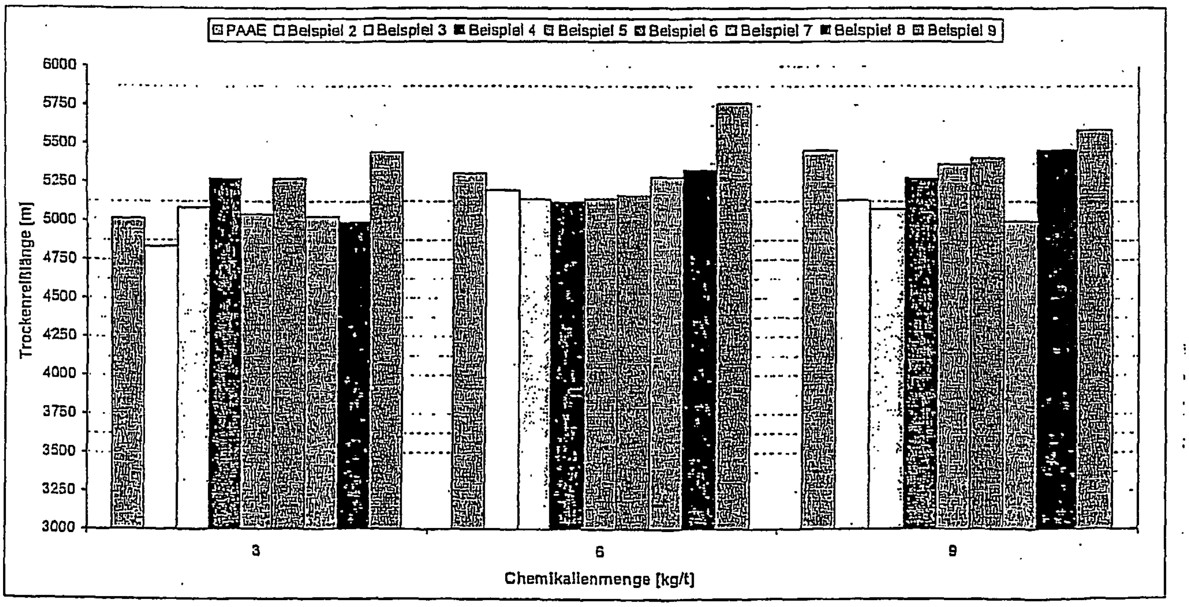


Abb. 2: Reißlänge trocken

Fig. 3

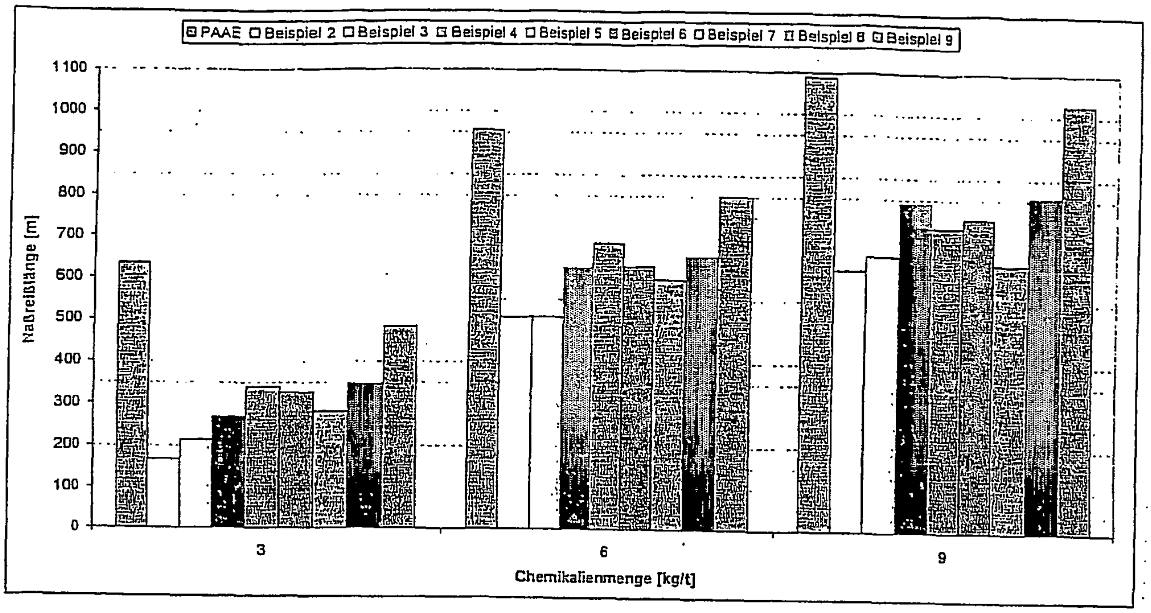


Abb. 3: Reißlänge nass

Fig. 4

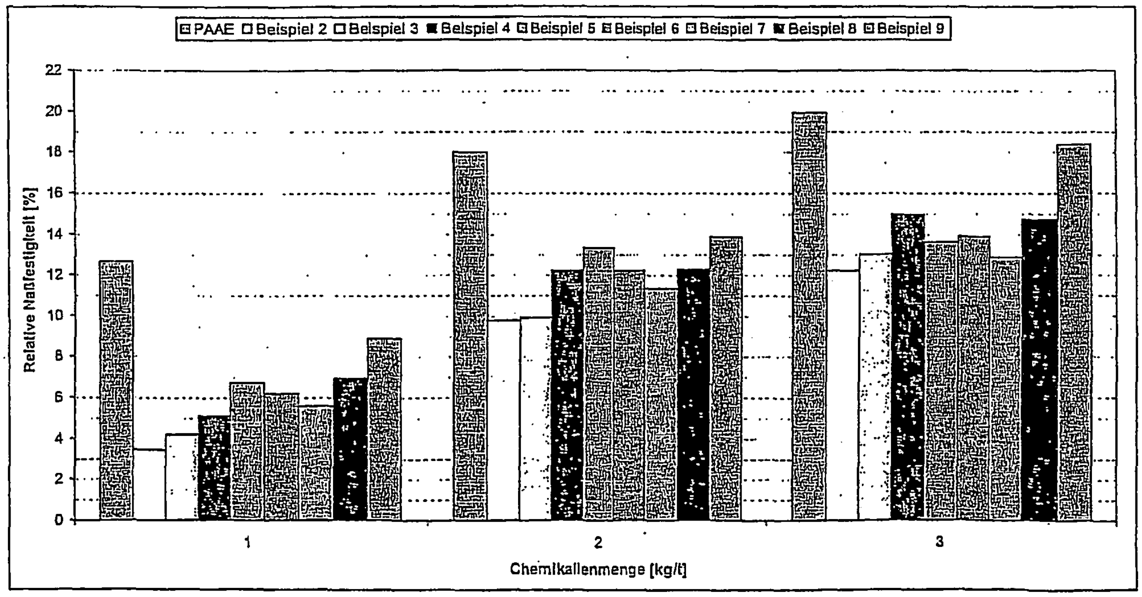


Abb. 4 Relative Nassfestigkeit

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4461858 A
- US 2926116 A
- US 2926 A
- US 154 A
- US 3733290 A
- US 4566943 A
- US 4605702 A
- WO 0040639 A
- DE 19640205 A1
- DE 69814359 T2
- DE 68916860
- WO 9633310 A
- DE 68916860 T2


### In der Beschreibung aufgeführte Nicht-Patentliteratur


- Papermaking Chemistry. vol. 4, 288-301
- **SUNG et al.** *Biol. Pharm, Bull,* 2003, vol. 26 (4), 492-500
- Aminosäuren, Peptide, Proteine. **H. JAKUBKE ; H. JESCHKEIT.** Lizenzausgabe für den Verlag Chemie. 1982
- **SHEEHAN et al.** *J. Am. Chem. Soc.,* 1973, vol. 95, 875
- **NOZAKI et al.** *Bull. Chem. Soc. Jpn.,* 1982, vol. 55, 2165
- **SCHMIDT et al.** *J. Chem. Soc. Chem. Commun.,* 1992, 1687